# EUROPEAN PATENT SPECIFICATION

(11) **EP 4 563 474 B1**
(45) Date of publication and mention of the grant of the patent: **14.01.2026**
(21) Application number: 24169163.3
(22) Date of filing: 09.04.2024
(51) Int. Cl.: B64F 1/223, B64F 1/12, B64F 1/24

(54) **VERTIPORT SYSTEM INCLUDING TRANSFER APPARATUS USING CABLE**
SENKRECHTSTARTERFLUGHAFENSYSTEM MIT SCHLEPPVORRICHTUNG MIT KABEL
SYSTÈME D'AÉROPORT POUR AÉRONEFS Á DÉCOLLAGE VERTICAL COMPRENANT UN APPAREIL DE TRANSFERT UTILISANT UN CÂBLE

(30) Priority: 28.11.2023 KR 20230167964
(43) Date of publication of application: 04.06.2025
(73) Proprietor: HYUNDAI MOTOR COMPANY, Seoul 06797 (KR); Kia Corporation, Seocho-gu Seoul 06797 (KR)
(72) Inventor: KIM, Jae Hak, Seoul (KR); CHOI, Jun Ki, Seoul (KR)
(74) Representative: Viering, Jentschura & Partner mbB Patent- und Rechtsanwälte

(56) References cited:
- CN-A- 106 114 896
- CN-A- 111 470 015
- GB-A- 2 565 858
- US-A- 4 488 693
- US-A1- 2023 048 651
- US-B2- 10 351 260
- US-B2- 11 745 898
- UBER: "Fast-Forwarding to a Future of On-Demand Urban Air Transportation Introduction", 27 October 2016 (2016-10-27), pages 1 - 98, XP055807611, Retrieved from the Internet <URL:https://www.uber.com/elevate.pdf> [retrieved on 20210526]

## Description

### CROSS-REFERENCE TO RELATED APPLICATIONS

This application claims the benefit of Korean Patent Application No. 10-2023-0167964, filed on November 28, 2023.

### TECHNICAL FIELD

The present disclosure relates to a vertiport system including a transfer apparatus using a cable.

### BACKGROUND

Recently, urban air mobility (UAM) vehicles for future transportation and traffic systems have been developed. A UAM vehicle may be an aircraft capable of vertical takeoff and landing flight. The development of a vertiport, a UAM vehicle takeoff/landing site, has been required along with the development of a UAM vehicle.

A vertiport may include infrastructure or systems with support services and equipment for landing, ground handling, and takeoff of manned or unmanned vertical takeoff and landing (VIOL) aircrafts. The vertiport may be generally considered to be installed on the rooftops of high-rise buildings or in large parks. The vertiport may have a smaller footprint with smaller landing and takeoff regions, as compared to a typical airport with general runways.

UAM vehicles may require taxiing for various purposes such as passenger boarding and disembarking/charging/parking/hangar transfer within a vertiport.

Further to the above, US 4 488 693 A, GB 2 565 858 A and US 10 351 260 B2 disclose a vertiport system and a method of transferring an aircraft according to the preamble of the independent claims. CN 106 114 896 A and CN 111 470 015 A disclose aircraft carrier lifts with rotating platforms.

### SUMMARY

Embodiments of the present disclosure provide a vertiport system capable of rapidly and stably transferring an aircraft along a predetermined transfer path within a vertiport and stably fixing the aircraft during transfer and parking of the aircraft.

The invention provides a vertiport system and a method of transferring an aircraft in vertiport system as set out in claims 1 and 13. Further advantages embodiments are described in the dependent claims and may be as described hereinbelow.

Accordingly, an embodiment of the present disclosure provides a vertiport system including a first area, a second area provided in a position different from that of the first area, and a transfer portion configured to transfer an aircraft between the first area and the second area. The transfer portion includes a front transfer unit having a front cable detachably connected to a front portion of the aircraft and a rear transfer unit having a rear cable detachably connected to a rear portion of the aircraft. The first area is a transfer area from which the aircraft is to be transferred to another area or a facility; and the second area is a takeoff and landing area from which the aircraft takes off and on which the aircraft lands. At least the transfer area includes a rotatable circular platform, and the vertiport system further comprises a controller including a motor controller controlling motors of the transfer portion and a platform controller controlling rotation of the transfer area.

The front cable may be configured to be detachably connected to a nose landing gear member of the aircraft. The rear cable may be configured to be detachably connected to a main landing gear member of the aircraft.

The rear transfer unit may include a first rear transfer unit and a second rear transfer unit respectively connected to two main landing gear members provided in the aircraft. The rear cable may include a first rear cable provided in the first rear transfer unit and a second rear cable provided in the second rear transfer unit.

The front transfer unit may further include a front motor to which the front cable is connected, the front motor being configured to provide a predetermined degree of tension force to the front cable.

The first rear transfer unit may further include a first rear motor to which the first rear cable is connected, the first rear motor being configured to provide a predetermined degree of tension force to the first rear cable. The second rear transfer unit may further include a second rear motor to which the second rear cable is connected, the second rear motor being configured to provide a predetermined degree of tension force to the second rear cable.

The transfer portion may be configured to generate a predetermined degree of tension force or traction force in at least one of the front cable, the first rear cable, and the second rear cable by driving the front motor, the first rear motor, and the second rear motor in a state in which the front cable, the first rear cable, and the second rear cable are connected to the aircraft.

The front transfer unit may be disposed in the first area. The first rear transfer unit and the second rear transfer unit may be disposed in the second area.

The aircraft may be transferred between the first area and the second area by driving the front motor, the first rear motor, and the second rear motor in a state in which the front cable, the first rear cable, and the second rear cable are connected thereto.

The vertiport system may further include that the motor controller is configured to control the front motor, the first rear motor, and the second rear motor. The motor controller may be set to move the aircraft in a rectilinear direction by collaboratively controlling the front motor, the first rear motor, and the second rear motor.

The motor controller may be set to detect tension force information of the front cable, the first rear cable, and the second rear cable, and to control, based on the detected tension force information, the front motor, the first rear motor, and the second rear motor.

Each of the front motor, the first rear motor, and the second rear motor may include a sensor configured to measure the tension force information and a communication module configured to transmit the tension force information to the motor controller.

The rectilinear direction may be a direction parallel to an imaginary straight line connecting a center of the first area and a center of the second area to each other.

At least one of the first area and the second area may be configured to be rotatable.

The vertiport system may further include a control center configured to control takeoff, landing, stopping, or transfer of the aircraft and to provide control information.

According to another embodiment of the present disclosure, there is provided a method of transferring an aircraft in a vertiport system, the method including landing, by an aircraft, in a takeoff and landing area, connecting a front cable and a rear cable to a landing gear member of the aircraft, transferring the aircraft to a transfer area including a turntable by driving a front motor to which the front cable is connected and a rear motor to which the rear cable is connected, and disconnecting the front cable and the rear cable from the landing gear member. The method further comprises adjusting a direction of the aircraft by rotating the transfer area in which the aircraft is positioned.

The front cable may be connected to a nose landing gear member of the aircraft. The rear cable may include a first rear cable and a second rear cable connected to two main landing gear members of the aircraft. The rear motor may include a first rear motor corresponding to the first rear cable and a second rear motor corresponding to the second rear cable.

In the transferring the aircraft by driving the motor, a predetermined degree of tension force or traction force may be formed in at least one of the front cable, the first rear cable, and the second rear cable by driving the front motor, the first rear motor, and the second rear motor.

In the transferring the aircraft by driving the motor, the aircraft may be moved in a rectilinear direction by collaboratively controlling the front motor, the first rear motor, and the second rear motor.

The transferring the aircraft by driving the motor may include detecting tension force information of the front cable, the first rear cable, and the second rear cable and controlling, based on the detected tension force information, the front motor, the first rear motor, and the second rear motor.

According to an example embodiment of the present disclosure, an aircraft may be stably transferred and fixed within a vertiport by connecting a cable to a landing gear member of the aircraft, thereby preventing the aircraft from being greatly shaken or overturned by strong winds during transfer and parking of the aircraft.

In addition, according to an example embodiment of the present disclosure, equipment such as a tug car may not be used for transfer of an aircraft, thereby reducing air pollution and noise pollution, and stably and efficiently performing a transfer.

### BRIEF DESCRIPTION OF THE DRAWINGS

The above and other aspects, features, and advantages of embodiments of the present disclosure will be more clearly understood from the following detailed description, taken in conjunction with the accompanying drawings, in which:
FIG. 1 illustrates a vertiport system according to an example embodiment of the present disclosure;
FIG. 2 illustrates a rear transfer unit of a vertiport system according to an example embodiment of the present disclosure;
FIG. 3 illustrates a structure in which a transfer portion of a vertiport system is connected to an aircraft according to an example embodiment of the present disclosure;
FIG. 4 illustrates a structure in which a front transfer unit of a vertiport system is connected to an aircraft according to an example embodiment of the present disclosure;
FIG. 5 illustrates a structure in which a rear transfer unit of a vertiport system is connected to an aircraft according to an example embodiment of the present disclosure;
FIG. 6 illustrates an operation of controlling, by a vertiport system, a motor of a transfer portion according to an example embodiment of the present disclosure;
FIGS. 7A, 7B, and 7C illustrate an operation in which an aircraft is transferred in a vertiport system according to an example embodiment of the present disclosure; and
FIG. 8 illustrates a method of controlling a vertiport system according to an example embodiment of the present disclosure.

### DETAILED DESCRIPTION OF ILLUSTRATIVE EMBODIMENTS

Various modifications may be made to the example embodiments. Here, the example embodiments are not construed as being limited to the disclosure and should be understood to include all changes within the scope of the claims.

Terms such as first, second, A, B, (a), (b), and the like may be used herein to describe components. Each of these terminologies is not used to define an essence, order, or sequence of a corresponding component but is used merely to distinguish the corresponding component from other component(s). For example, a first component may be referred to as a second component, and similarly the second component may also be referred to as the first component. The term "and/or" may include combinations of a plurality of related described items or any of a plurality of related described items.

The terminology used herein is for the purpose of describing particular example embodiments only and is not to be limiting of the example embodiments. As used herein, the singular forms "a," "an," and "the" are intended to include the plural forms as well, unless the context clearly indicates otherwise. As used herein, the term "and/or" includes any one and any combination of any two or more of the associated listed items. It will be further understood that the terms "comprises" and/or "comprising," when used in this code, specify the presence of stated features, integers, steps, operations, elements, components, or a combination thereof, but these terms do not preclude the presence or addition of one or more other features, integers, steps, operations, elements, components, and/or groups thereof.

Unless otherwise defined herein, all terms used herein including technical or scientific terms have the same meanings as those generally understood by one of ordinary skill in the art. Terms defined in generally used dictionaries should be construed to have meanings matching contextual meanings in the related art and are not to be construed as having an ideal or excessively formal meaning, unless otherwise defined herein.

An aircraft may refer to a mobility vehicle capable of moving by flying in the sky. That is, the aircraft, in addition to referring to a helicopter, drone, tilt rotor, fixed-wing airplane, and the like, may include vehicles capable of flying in a state in which the vehicles move on the ground using wheels, and the wheels are separated from the ground. In addition, the aircraft may include a manned aircraft and an unmanned aircraft. The manned aircraft may include an airframe capable of operating autonomously in addition to an airframe controlled by a pilot.

Hereinafter, example embodiments of the present disclosure will be described with reference to the accompanying drawings.

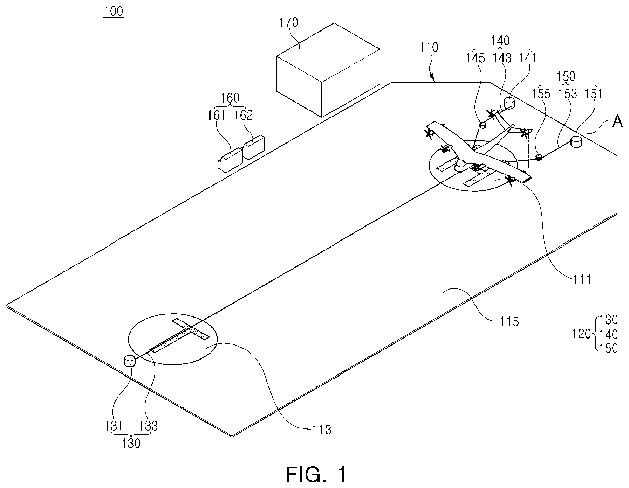

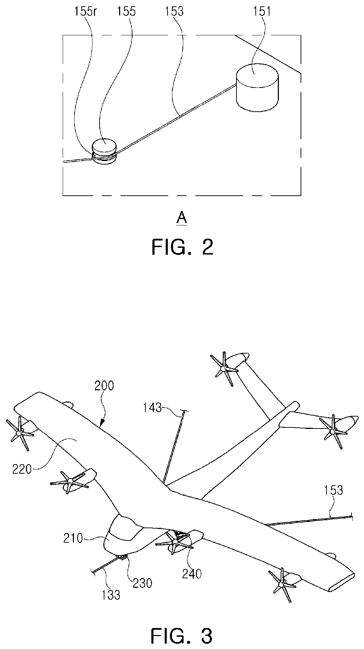

FIG. 1 illustrates a vertiport system 100 according to an example embodiment of the present disclosure. FIG. 2 illustrates rear transfer units 140 and 150 of the vertiport system 100 according to an example embodiment of the present disclosure.

FIG. 1 is a schematic diagram illustrating the vertiport system 100 according to an example embodiment. FIG. 2 is an enlarged view of portion A illustrated in FIG. 1.

The vertiport system 100 according to an example embodiment, a takeoff and landing site (for example, a vertical takeoff and landing airfield or station) for an aircraft 200 capable of vertical takeoff and landing (VTOL) may include infrastructure for accommodating an aircraft from a flight, resetting the aircraft for a subsequent flight, and allowing the aircraft to depart for a subsequent flight. Here, the aircraft 200 may be an air mobility vehicle including an urban air mobility (UAM) vehicle and an advanced air mobility (AAM) vehicle, and a type of the aircraft 200 is not particularly limited.

The vertiport system 100 may refer to various facilities providing space for vertical takeoff and landing of an aircraft, and the vertiport system 100 may be understood as including a verti-hub, a verti-port, or a verti-stop categorized depending on a size thereof. For example, the verti-hub may be a largest UAM airfield, may allow large-scale transfer of surrounding traffic such as airports, may have support infrastructure such as charging and maintenance, and may allow a large number of UAM airframes to be parked after the end of operation. The verti-port may be a vertical takeoff and landing airfield smaller than that of the verti-hub, may have airframe support infrastructure (charging and maintenance), and may provide passenger convenience facilities. The verti-stop may be smaller than the verti-port and may be a small takeoff and landing airfield having one or two parking ramps.

Referring to FIGS. 1 and 2, the vertiport system 100 according to an example embodiment may include a port body 110, a transfer portion 120, a controller 160, and a control center 170.

The port body 110 is configured to allow the aircraft 200 to take off or land, stop, or move. For example, the port body 110 may include components for takeoff, landing, stopping, and movement of the aircraft 200.

The port body 110 includes a takeoff and landing area 111 in which the aircraft 200 takes off or lands and a transfer area 113 for stopping the aircraft 200 or moving the aircraft 200 to another area of the port body 110 (or the vertiport system 100). Each of the takeoff and landing area 111 and the transfer area 113 is configured as one or more areas. The takeoff and landing area 111 and the transfer area 113 may be examples of separate areas provided for the aircraft 200 to be transferred, to be positioned, or to stop, and they are also referred to as a first area and a second area in various example embodiments.

The takeoff and landing area 111 is provided in a portion of the port body 110, and the transfer area 113 is provided in another portion of the port body 110 spaced apart from the takeoff and landing area 111. For example, the port body 110 may be formed such that the takeoff and landing area 111 is disposed on one side of a basic area 115, and the transfer area 113 is disposed on the other side of the basic area 115.

The aircraft 200 may vertically take off or land in the takeoff and landing area 111. The aircraft 200, landing in the takeoff and landing area 111, is transferred to the transfer area 113 through the transfer portion 120. In addition, the aircraft 200 positioned in the transfer area 113 is transferred to the takeoff and landing area 111 through the transfer portion 120.

The takeoff and landing area 111 and the transfer area 113 may both be provided in the form of a circular platform installed in the port body 110 (or the basic area 115). According to the invention, at least the transfer area 113, optionally also the takeoff and landing area 111, is rotatable with respect to the port body 110. The circular platforms of the takeoff and landing area 111 and/or the transfer area 113 are configured to physically rotate. For example, at least the transfer area 113, optionally also the takeoff and landing area 111, includes a motor for rotating a circular platform, and the circular platform may be coupled to the motor to be rotated by the motor.

The transfer area 113 is rotatable with respect to the port body 110. For example, the transfer area 113 (that is, the circular platform of the transfer area 113) may rotate with respect to the basic area 115 and the takeoff and landing area 111 of the port body 110. The aircraft 200, stopping in the transfer area 113, may rotate with the transfer area 113 as the transfer area 113 rotates, and a direction in which the aircraft 200 is oriented may be adjusted based on the rotation of the transfer area 113.

The transfer area 113 is an area in which the aircraft 200, transferred from the takeoff and landing area 111, temporarily stops before being transferred to another area, or an area in which the aircraft 200, transferred from another area, temporarily stops before being transferred to the takeoff and landing area 111. In addition, as another example, the transfer area 113 may be an area in which the aircraft 200 temporarily stops for boarding and disembarkation of passengers and/or loaded cargo, but the present disclosure is not limited thereto.

Although not illustrated, the transfer area 113 may be configured to transfer the aircraft 200 to a maintenance area, a charging area, a boarding and disembarking area, a transit area, and a containment area provided in the vertiport system 100 (or a smart building including the vertiport system 100). For example, FIG. 1 may be understood as a schematic diagram illustrating a rooftop of a building including the vertiport system 100, and the transfer area 113 (that is, the circular platform of the transfer area 113) may be configured to ascend and descend within a building.

The transfer portion 120 can transfer/move the aircraft 200. It transfers the aircraft 200 between the takeoff and landing area 111 and the transfer area 113 by towing the aircraft 200 using a cable.

The transfer portion 120 includes a front transfer unit 130 disposed in the transfer area 113 and connected to a front surface or a front portion of the aircraft 200 and rear transfer units 140 and 150 disposed in the takeoff and landing area 111 and connected to a rear surface or a rear portion of the aircraft 200.

The front transfer unit 130 may be connected to a nose landing gear member (for example, a nose landing gear member 230 in FIG. 3) of the aircraft 200 to transfer the aircraft 200. The rear transfer units 140 and 150 each may be connected to a respective main landing gear member of the aircraft 200 (for example, a main landing gear member 240 in FIG. 3) to transfer the aircraft 200.

The front transfer unit 130 and the rear transfer units 140 and 150 may respectively have cables 133, 143, and 153 connected to the nose landing gear member and the main landing gear members of the aircraft 200 and may provide a tension force and/or a traction force to the cables 133, 143, and 153 through motors 131, 141, and 151. For example, the front transfer unit 130 and the rear transfer units 140 and 150 may include a cable traction apparatus.

The rear transfer units 140 and 150 may include a first rear transfer unit 140 and a second rear transfer unit 150. For example, the aircraft 200 may include two main landing gear members, and the rear transfer units 140 and 150 may be configured as two transfer units to correspond to the number of main landing gear members. The first rear transfer unit 140 may be connected to a first main landing gear member, and the second rear transfer unit 150 may be connected to a second main landing gear member.

The front transfer unit 130 may include a front motor 131 and a front cable 133. The front cable 133 may be connected to the front motor 131, and the front motor 131 may provide a tension force and/or a traction force to the front cable 133. The front transfer unit 130 may have a structure in which at least a portion of the front cable 133 is accommodated in the front motor 131 in a state of being wound such that the front cable 133 is unwound from or wound around the front motor 131 by driving the front motor 131. For example, the front cable 133 may be wound around at least a portion of the front motor 131 by rotating the front motor 131 in a direction or may be unwound from the front motor 131 by rotating the front motor 131 in an opposite direction in a state in which both ends of the front cable 133 are connected to the front motor 131 and the aircraft 200. A traction force and a tension force for transfer of the aircraft 200 may be formed in the front cable 133 based on an operation of winding or unwinding at least a portion of the front cable 133 by controlling the front motor 131.

The first rear transfer unit 140 may include a first rear motor 141, a first rear cable 143, and a first guide member 145, and the second rear transfer unit 150 may include a second rear motor 151, a second rear cable 153, and a second guide member 155. For example, the first rear transfer unit 140 and the second rear transfer unit 150 may be different from each other in terms of a position and a portion connected to the aircraft 200 and may have the same shape and structure.

The rear cables 143 and 153 may be connected to the rear motors 141 and 151. The rear motors 141 and 151 may provide a tension force and/or a traction force to the rear cables 143 and 153. The rear transfer units 140 and 150 may have a structure in which at least a portion of the rear cables 143 and 153 is accommodated in the rear motors 141 and 151 in a state of being wound such that the rear cables 143 and 153 are unwound from or wound around the rear motors 141 and 151 by driving the rear motors 141 and 151. For example, the rear cables 143 and 153 may be wound around at least a portion of the rear motors 141 and 151 by rotating the rear motors 141 and 151 in a direction or may be unwound from the rear motors 141 and 151 by rotating the rear motors 141 and 151 in an opposite direction in a state in which both ends of the rear cables 143 and 153 are connected to the rear motors 141 and 151 and the aircraft 200. A traction force and a tension force for transfer of the aircraft 200 may be formed in the rear cables 143 and 153 based on an operation of winding or unwinding at least a portion of the rear cables 143 and 153 by controlling the rear motors 141 and 151.

The guide members 145 and 155 may maintain a tension force of the rear cables 143 and 153, connected between the aircraft 200 and the rear motors 141 and 151, and may change a direction of the force. At least a portion of the rear cables 143 and 153 may be connected to and supported by the guide members 145 and 155, thereby extending from the rear motors 141 and 151 across the guide members 145 and 155 toward the aircraft 200.

The guide members 145 and 155 may change the direction of force by partially bending the rear cables 143 and 153. For example, some sections of the rear cables 143 and 153, positioned between the aircraft 200 and the guide members 145 and 155, may be inclined at a predetermined degree of inclination with respect to some sections of the rear cables 143 and 153, positioned between the rear motors 141 and 151 and the guide members 145 and 155.

Recesses 155r in which the rear cables 143 and 153 are mounted and received may be formed in the guide members 145 and 155. When the rear cables 143 and 153 move by the rear motors 141 and 151, the rear cables 143 and 153 may move along the recesses 155r of the guide members 145 and 155.

The front transfer unit 130 and the rear transfer units 140 and 150 may operate in opposite manners in a process of transferring the aircraft 200.

First, when the aircraft 200 is transferred from the takeoff and landing area 111 to the transfer area 113, the front transfer unit 130 may operate to form a traction force for towing the aircraft 200 as the front cable 133 is wound by the front motor 131, and the rear transfer units 140 and 150 may operate to maintain an appropriate tension force while the rear cables 143 and 153 are unwound by the rear motors 141 and 151, thereby supporting the traction of the front cable 133.

Conversely, when the aircraft 200 is transferred from the transfer area 113 to the takeoff and landing area 111, the rear transfer units 140 and 150 may operate to form a traction force for towing the aircraft 200 as the rear cables 143 and 153 are wound by the rear motors 141 and 151, and the front transfer unit 130 may operate to maintain an appropriate tension force while the front cable 133 is unwound by the front motor 131, thereby supporting the traction of the rear cables 143 and 153.

A connection structure between the transfer portion 120 and the aircraft 200 will be described in more detail below with reference to FIGS. 3 to 5.

The controller 160 can control an operation of at least a portion of the vertiport system 100. The controller 160 includes a motor controller 161 controlling the motors 131, 141, and 151 of the transfer portion 120 and a platform controller 162 controlling rotation of the transfer area 113.

The motor controller 161 may independently and/or dependently control operations of the front motor 131 of the front transfer unit 130, the first rear motor 141 of the first rear transfer unit 140, and the second rear motor 151 of the second rear transfer unit 150. The motor controller 161 may be set to collaboratively control (or cooperatively control) the front motor 131, the first rear motor 141, and the second rear motor 151, such that the aircraft 200 may move forward and backward in a rectilinear direction when the aircraft 200 is transferred.

The platform controller 162 may control a rotational operation of a platform of the transfer area 113. However, the present disclosure is not limited to rotation control of the transfer area 113. In various example embodiments, when the takeoff and landing area 111 is rotatably provided, the platform controller 162 may also be configured to control a rotational operation of a platform of the takeoff and landing area 111.

The control center 170 may comprehensively manage and monitor the vertiport system 100 and may control takeoff, landing, stopping, and transfer of the aircraft 200. The control center 170 may be positioned to be adjacent to the takeoff and landing area 111 and may comprehensively consider an operating environment within a control area, thereby providing control information on takeoff, landing, and transfer of the aircraft 200 to the controller 160 and/or a ground crew member.

FIG. 1 schematically illustrates the vertiport system 100 according to an example embodiment. Components of the vertiport system 100 are not limited to those in the illustrated example embodiment, and other components (for example, a takeoff and landing guide unit, a walking area, and the like) may be further included in various example embodiments.

In addition, according to the example embodiment illustrated in FIG. 1, the vertiport system 100 may include one takeoff and landing area 111 and one transfer area 113, but the present disclosure is not limited thereto. In various example embodiments, at least one of the takeoff and landing area 111 and the transfer area 113 may be configured as two or more areas. For example, the vertiport system 100 may include one takeoff and landing area 111 and a plurality of transfer areas 113, and a front transfer unit 130 may be provided in each of the plurality of transfer areas 113. In this case, the aircraft 200, positioned in the takeoff and landing area 111, may be transferred using a front transfer unit 130 of a transfer area 113 to be transferred, among the plurality of transfer areas 113, and rear transfer units 140 and 150 of the takeoff and landing area 111.

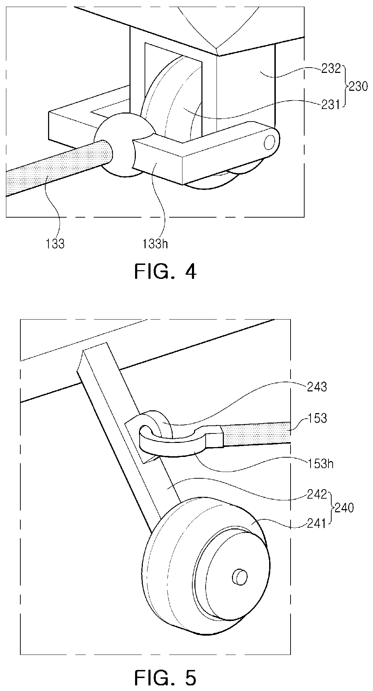

FIG. 3 illustrates a structure in which the transfer portion 120 of the vertiport system 100 is connected to the aircraft 200 according to an example embodiment of the present disclosure. FIG. 4 illustrates a structure in which the front transfer unit 130 of the vertiport system 100 is connected to the aircraft 200 according to an example embodiment of the present disclosure. FIG. 5 illustrates a structure in which the rear transfer units 140 and 150 of the vertiport system 100 are connected to the aircraft 200 according to an example embodiment of the present disclosure.

FIGS. 3 to 5 illustrate a structure in which the transfer units 130, 140, and 150 of the transfer portion 120, illustrated in FIG. 1, are connected to the aircraft 200. Hereinafter, FIGS. 3 to 5 will be described with reference to FIG. 1.

FIG. 5 illustrates a connection structure between the second rear transfer unit 150 and the aircraft 200, and the connection structure may be substantially the same as a connection structure between the first rear transfer unit 140 and the aircraft 200.

Referring to FIGS. 3 to 5 together with FIG. 1, the vertiport system 100 according to an example embodiment may include the transfer portion 120 for transfer of the aircraft 200, and the transfer portion 120 may be connected to each of a plurality of landing gear members 230 and 240 of the aircraft 200 to tow and transfer the aircraft 200.

The aircraft 200 may be an air mobility vehicle capable of vertical takeoff and landing and may include an airframe (or a fuselage) 210 in which passengers board and/or cargo is loaded, a wing portion 220 coupled to an upper portion of the airframe 210, the wing portion 220 including a rotor generating a lifting force, and the plurality of landing gear members 230 and 240 coupled to a lower portion of the airframe 210, the plurality of landing gear members 230 and 240 supporting takeoff, landing, and taxiing of the aircraft 200. The plurality of landing gear members 230 and 240 may include a nose landing gear member 230 positioned at the front and two main landing gear members 240 positioned at the rear.

The transfer portion 120 may include the front transfer unit 130 connected to the nose landing gear member 230 of the aircraft 200 and two rear transfer units (for example, the first rear transfer unit 140 and the second rear transfer unit 150) connected to the two main landing gear members 240 of the aircraft 200.

The front transfer unit 130 may include the front cable 133 detachably connected to the nose landing gear member 230. The first rear transfer unit 140 and the second rear transfer unit 150 may include the first rear cable 143 and the second rear cable 153 detachably connected to the main landing gear members 240, respectively.

As illustrated in FIG. 4, the front cable 133 of the front transfer unit 130 may be connected to the nose landing gear member 230 of the aircraft 200. The front transfer unit 130 may be connected to the nose landing gear member 230 in a form in which a wheel 231 of the nose landing gear member 230 is rotatable, when the aircraft 200 is transferred/towed. The front cable 133 may include a first hook 133h connected to a wheel cap 232 of the nose landing gear member 230. For example, the first hook 133h may be coupled to one end of the front cable 133, and the first hook 133h may be detachably connected to the wheel cap 232 of the nose landing gear member 230. When the aircraft 200 is transferred, the first hook 133h may be fastened to the wheel cap 232. When transfer of the aircraft 200 is completed, the first hook 133h may be separated from the wheel cap 232.

A connection structure between the front cable 133 and the nose landing gear member 230 is not limited to the form illustrated in FIG. 4, and the front cable 133 may be detachable and may be connected in various manners within a structure in which the wheel 231 of the nose landing gear member 230 is rotatable, when the aircraft 200 is transferred.

As illustrated in FIG. 5, the second rear cable 153 of the second rear transfer unit 150 may be connected to the main landing gear member 240 of the aircraft 200. The second rear transfer unit 150 may be connected to the main landing gear member 240 in a form in which a wheel 241 of the main landing gear member 240 is rotatable, when the aircraft 200 is transferred/towed. The second rear cable 153 may include a second hook 153h connected to a support bar 242 supporting the wheel 241 of the main landing gear member 240, and the support bar 242 may include a fastener 243 to which the second hook 153h is fastened. For example, the second hook 153h may be coupled to one end of the second rear cable 153, and the second hook 153h may be detachably connected to the fastener 243 of the main landing gear member 240. When the aircraft 200 is transferred, the second hook 153h may be fastened to the fastener 243. When transfer of the aircraft 200 is completed, the second hook 153h may be separated from the fastener 243.

A connection structure between the second rear cable 153 and the main landing gear member 240 is not limited to the form illustrated in FIG. 5, and the second rear cable 153 may be detachable and may be connected in various manners within a structure in which the wheel 241 of the main landing gear member 240 is rotatable, when the aircraft 200 is transferred.

In the above description, the connection structure between the rear transfer units 140 and 150 and the main landing gear member 240 has been described based on the second rear transfer unit 150, and it may be applied to the first rear transfer unit 140 in the same manner.

According to the example embodiment illustrated in FIGS. 3 to 5, the aircraft 200 may include a tricycle landing gear member including one nose landing gear member 230 and two main landing gear members 240. However, types and shapes of the landing gear members 230 and 240 provided in the aircraft 200 are not limited to the illustrated example embodiment. In addition, a structure in which the front cable 133 and the rear cables 143 and 153 are connected to the aircraft 200 may be appropriately modified depending on the types and shapes of the landing gear members 230 and 240.

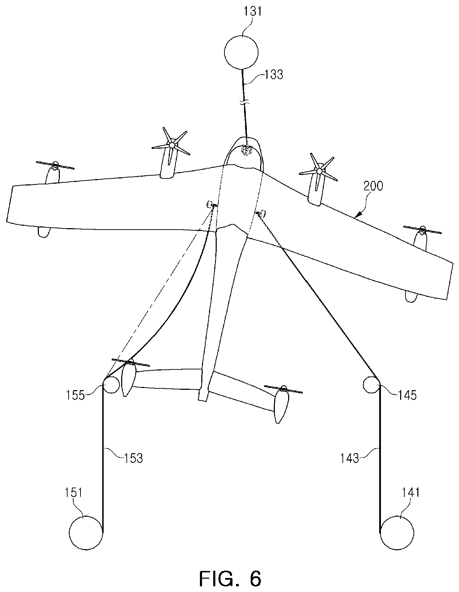

FIG. 6 illustrates an operation of controlling, by the vertiport system 100, a motor of the transfer portion 120 according to an example embodiment of the present disclosure.

Referring to FIG. 6, a vertiport system (for example, the vertiport system 100 in FIG. 1) according to an example embodiment may control the front motor 131, the first rear motor 141, and the second rear motor 151, included in a transfer portion (for example, the transfer portion 120 in FIG. 1), thereby stably transferring the aircraft 200.

A motor controller (for example, the motor controller 161 in FIG. 1) of the vertiport system 100 may collaboratively control the front motor 131, the first rear motor 141, and the second rear motor 151 to generate a tension force and/or a traction force in the front cable 133, the first rear cable 143, and the second rear cable 153 for moving the aircraft 200 in a rectilinear direction.

Here, the rectilinear direction may be parallel to a direction in which a takeoff and landing area 111 and a transfer area 113 oppose each other. For example, the rectilinear direction may refer to a direction parallel to an imaginary straight line connecting a center of the takeoff and landing area 111 and a center of the transfer area 113 to each other. When the aircraft 200 moves in the rectilinear direction, a moving distance of the aircraft 200 may be a shortest distance.

A plurality of motors 131, 141, and 151, included in the transfer portion 120, may measure tension forces of the cables 133, 143, and 153 respectively connected thereto and may transmit measured data to the motor controller 161. The plurality of motors 131, 141, and 151 may include a sensor (not illustrated) capable of measuring tension forces generated in the cables 133, 143, and 153 and a communication module (not illustrated) capable of transmitting measured tension force data to the motor controller 161. For example, it may be understood that FIG. 6 illustrates motor housings forming the exteriors of the front motor 131, the first rear motor 141, and the second rear motor 151. Although not illustrated, rollers around which cables 133, 143, and 153 are wound, sensors, and communication modules may be disposed in the motor housings, respectively.

The motor controller 161 may control, based on the tension force data transmitted from the front motor 131, the first rear motor 141, and the second rear motor 151, driving of the front motor 131, the first rear motor 141, and the second rear motor 151. For example, the motor controller 161 may control the front motor 131, the first rear motor 141, and the second rear motor 151 using the tension force data transmitted from the motors 131, 141, and 151, such that the front cable 133, the first rear cable 143, and the second rear cable 153 may move the aircraft 200 in the rectilinear direction.

The motor controller 161 may detect, based on the tension force data, a cable having a tension force value greater or less than a reference tension force value, among the front cable 133, the first rear cable 143, and the second rear cable 153, may detect a cable having abnormal behavior, or may control a corresponding motor to set a tension force value of a corresponding cable to the reference tension force value.

As illustrated in FIG. 6, when the second rear cable 153 has an insufficient tension force (for example, see the second rear cable 153 indicated by a solid line in FIG. 6), a phenomenon may occur in which the aircraft 200 is turned toward the first rear cable 143 due to tension forces of the front cable 133 and the first rear cable 143. For example, based on FIG. 6, when the second rear cable 153 has an insufficient tension force, a front surface of the aircraft 200 may not oppose the front motor 131, but may be turned toward a right side of the front motor 131. In this case, the motor controller 161 may control the second rear motor 151 such that a tension force of the first rear cable 143 increases (for example, see the second rear cable 153 indicated by a dotted line in FIG. 6), thereby stably maintaining the tension forces of the front cable 133, the first rear cable 143, and the second rear cable 153 applied to the aircraft 200.

A direction in which the aircraft 200 is turned in FIG. 6 may be exemplary, and the aircraft 200 may be turned to be oriented in a direction other than the rectilinear direction due to the overall effect of the tension forces applied to the front cable 133, the first rear cable 143, and the second rear cable 153.

The vertiport system 100 according to an example embodiment may measure or detect, in real time, tension forces of the plurality of motors 131, 141, and 151 applied to the plurality of cables 133, 143, and 153, and may collaboratively control, based on the measured tension forces, the plurality of motors 131, 141, and 151, thereby stably maintaining a tension force and/or a traction force applied to the aircraft 200 by the plurality of cables 133, 143, and 153, and allowing the aircraft 200 to move forward and backward in the rectilinear direction.

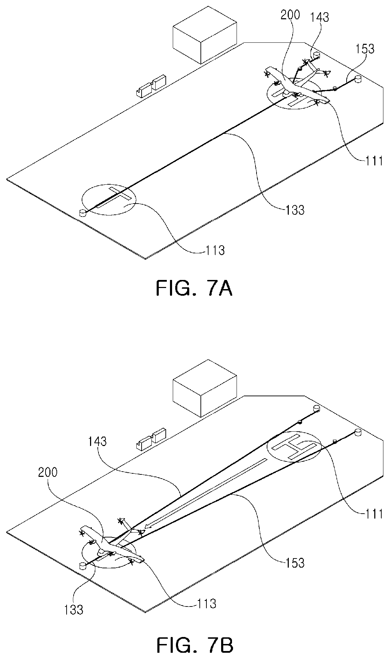

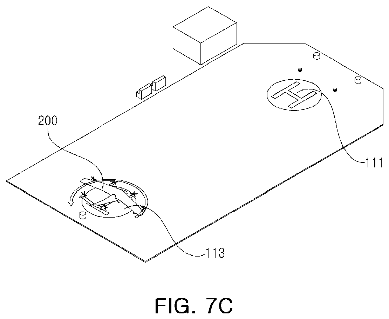

FIGS. 7A, 7B, and 7C illustrate an operation in which the aircraft 200 is transferred in the vertiport system 100 according to an example embodiment of the present disclosure.

FIGS. 7A, 7B, and 7C illustrate an operation in which the aircraft 200 lands in the takeoff and landing area 111 and then is transferred to the transfer area 113 by the transfer portion 120. Hereinafter, FIGS. 7A, 7B, and 7C will be described with reference to FIGS. 1 to 6.

Referring to FIG. 7A, the aircraft 200 lands in the takeoff and landing area 111 under the control of the control center 170. After the aircraft 200 lands in the takeoff and landing area 111, the front cable 133, the first rear cable 143, and the second rear cable 153 may be connected to a landing gear member of the aircraft 200. For example, an operation of fastening the cables 133, 143, and 153 to the landing gear members may be performed by a ground crew member or a worker.

When the aircraft 200 lands in the takeoff and landing area 111, the aircraft 200 may land such that a front surface thereof opposes the front motor 131 or the transfer area 113. In various example embodiments, when the takeoff and landing area 111 is rotatable, the aircraft 200 may land in the takeoff and landing area 111, and then the front surface of the aircraft 200 may rotate such that the front surface of the aircraft 200 opposes the transfer area 113.

Referring to FIG. 7B, the front cable 133, the first rear cable 143, and the second rear cable 153 may be fastened to the landing gear members of the aircraft 200, and then the front motor 131, the first rear motor 141, and the second rear motor 151 may be driven to transfer the aircraft 200. The front motor 131, the first rear motor 141, and the second rear motor 151 may be driven to generate a tension force and/or a traction force for transfer of the aircraft 200 in each of the front cable 133, the first rear cable 143, and the second rear cable 153.

When the aircraft 200 is transferred from the takeoff and landing area 111 to the transfer area 113, the front cable 133 may be wound around the front motor 131, and accordingly a length of the front cable 133, positioned between the aircraft 200 and the front motor 131, may decrease. The rear cables 143 and 153 may be unwound from the rear motors 141 and 151, and accordingly lengths of the rear cables 143 and 153, positioned between the aircraft 200 and the rear motors 141 and 151, may increase.

Referring to FIG. 7C, after the aircraft 200 is completely transferred to the transfer area 113, the front cable 133, the first rear cable 143, and the second rear cable 153 may be separated and disconnected from the landing gear member of the aircraft 200. For example, an operation of connecting/disconnecting the cables 133, 143, and 153 and the landing gear members to/from each other may be performed by a ground crew member or a worker.

After the cables 133, 143, and 153 and the landing gear members are disconnected from each other, a direction in which the aircraft 200 is oriented may be adjusted by rotating the transfer area 113, as necessary. For example, a front surface of the aircraft 200 immediately after being transferred to the transfer area 113 may be in a state of opposing the front motor 131, and the transfer area 113 may be rotated, such that the front surface of the aircraft 200 may oppose the takeoff and landing area 111 or the rear motors 141 and 151.

An operation of transferring the aircraft 200, positioned in the transfer area 113, to the takeoff and landing area 111 may be performed in the order of FIGS. 7C, 7B, and 7A. The aircraft 200 may be disposed such that the front surface thereof opposes the front motor 131, and then the cables 133, 143, and 153 may be connected to the landing gear members. The aircraft 200 may be aligned in a direction in which the front cable 133 is connectable to the nose landing gear member 230 and the rear cables 143 and 153 are connectable to the main landing gear members 240 through rotation of the transfer area 113.

For example, when the front surface of the aircraft 200, positioned in the transfer area 113, is disposed to oppose the takeoff and landing area 111, the transfer area 113 may be rotated such that the front surface of the aircraft 200 is disposed to oppose the front motor 131, and then the front cable 133, the first rear cable 143, and the second rear cable 153 may be connected to the aircraft 200.

In the vertiport system 100 according to an example embodiment, as illustrated in FIGS. 7A and 7B, when the aircraft 200 temporarily stops on the port body 110 (in particular, the takeoff and landing area 111 and the transfer area 113) and is moved to the takeoff and landing area 111 and the transfer area 113, the aircraft 200 may be connected through the plurality of cables 133, 143, and 153 having a predetermined degree of tension force, and thus may be stably fixed. In general, a vertiport may be installed or provided on a roof of a building. According to an example embodiment of the present disclosure, the aircraft 200 may be prevented or minimized to be overturned or greatly shaken by strong winds generated by the vertiport, when the aircraft 200 is moved and/or parked.

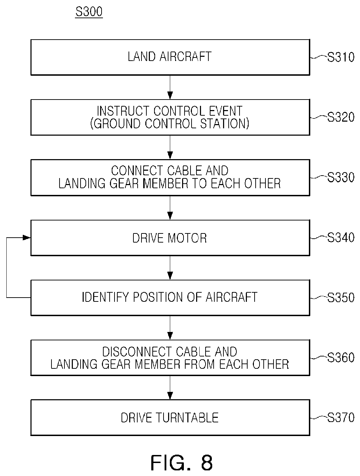

FIG. 8 illustrates a method S300 of controlling the vertiport system 100 according to an example embodiment of the present disclosure.

FIG. 8 is a flowchart illustrating the method S300 of controlling the vertiport system 100 described above with reference to FIGS. 1 to 6. Some operations of FIG. 8 may be performed by at least some components of the vertiport system 100 illustrated in FIGS. 1 to 6.

Hereinafter, FIG. 8 will be described with reference to FIGS. 1 to 6, and a repeated description will be omitted.

Referring to FIG. 8, the control method S300 of the vertiport system 100 according to an example embodiment may include an operation in which an aircraft lands (S310), an operation of instructing a control event (S320), an operation of connecting a cable and a landing gear member to each other (S330), an operation of driving a motor (S340), an operation of identifying a position of the aircraft (S350), an operation of disconnecting the cable and the landing gear member from each other (S360), and an operation of driving a turntable (S370).

In the operation S310 in which the aircraft lands, the aircraft 200 may land in the takeoff and landing area 111.

In the operation S320 of instructing the control event, the control center 170 may comprehensively consider an environment within a control area and may transmit control information and an instruction for transfer of the aircraft 200 to the controller 160 and a ground crew member.

In the operation S330 of connecting the cable and the landing gear member to each other, a ground crew member may connect the front cable 133 to the nose landing gear member 230 and may connect the first rear cable 143 and the second rear cable 153 to two main landing gear members 240.

In the operation S340 of driving the motor, the aircraft 200 may be transferred by driving a motor through the motor controller 161. The motor controller 161 may collaboratively control the front motor 131, the first rear motor 141, and the second rear motor 151, thereby moving the aircraft 200 in a rectilinear direction.

In the operation S350 of identifying the position of the aircraft, the position of the aircraft 200 may be identified and whether transfer of the aircraft 200 to the transfer area 113 has been completed may be identified. As a result of identifying the position of the aircraft 200, when additional transfer to the transfer area 113 is necessary, the motor may continue to be driven. When transfer to the transfer area 113 is completed, driving of the motor may be stopped.

In the operation S360 of disconnecting the cable and the landing gear member from each other, when transfer of the aircraft 200 is completed and driving of the motor is stopped, the ground crew member may disconnect the front cable 133 from the nose landing gear member 230 and may disconnect the first rear cable 143 and the second rear cable 153 from the two main landing gear members 240.

In the operation S370 of driving the turntable, a direction of the aircraft 200 may be adjusted by rotating the transfer area 113 in which the aircraft 200 is positioned.

While example embodiments have been illustrated and described above, it will be apparent to those skilled in the art that modifications and variations could be made without departing from the scope of the present invention as defined by the appended claims.

In addition, in example embodiments of the present disclosure, some components may be deleted, and components of respective example embodiments may be combined with each other, to the extent that they fall within the scope of the claims.

## Claims

1. A vertiport system (100) comprising:
a first area;
a second area separate from the first area; and
a transfer portion (120) configured to transfer an aircraft (200) between the first area and the second area, wherein the transfer portion (120) comprises a front transfer apparatus (130) having a front cable (133) detachably connectable to a front portion of the aircraft (200) and a rear transfer apparatus (140, 150) having a rear cable (143, 153) detachably connectable to a rear portion of the aircraft (200),
wherein the first area is a transfer area (113) from which the aircraft (200) is to be transferred to another area or a facility; and the second area is a takeoff and landing area (111) from which the aircraft (200) takes off and on which the aircraft (200) lands,
**characterized in that** at least the transfer area (113) includes a rotatable circular platform,
the vertiport system (100) further comprises a controller (160) including a motor controller (161) controlling motors of the transfer portion (120) and a platform controller (162) controlling rotation of the transfer area (113).

2. The vertiport system (100) of claim 1, wherein:
the front cable(133) is configured to be detachably connected to a nose landing gear member (230) of the aircraft (200); and
the rear cable (143, 153) is configured to be detachably connected to a main landing gear member (240) of the aircraft (200).

3. The vertiport system (100) of claim 1 or 2, wherein:
the rear transfer apparatus comprises a first rear transfer apparatus (140) and a second rear transfer apparatus (150) respectively connected to two main landing gear members (240) disposed in the aircraft (200); and
the rear cable comprises a first rear cable (143) disposed in the first rear transfer apparatus (140) and a second rear cable (153) disposed in the second rear transfer apparatus (150).

4. The vertiport system (100) of one of claims 1-3, wherein the front transfer apparatus (130) further comprises a front motor (131) to which the front cable (133) is connected, the front motor (131) being configured to provide a predetermined degree of tension force to the front cable (133).

5. The vertiport system (100) of claim 3 or of claim 4 in combination with claim 3, wherein:
the first rear transfer apparatus (140) further comprises a first rear motor (141) to which the first rear cable (143) is connected, the first rear motor (141) being configured to provide a predetermined degree of tension force to the first rear cable (143); and
the second rear transfer apparatus (150) further comprises a second rear motor (151) to which the second rear cable (153) is connected, the second rear motor (151) being configured to provide a predetermined degree of tension force to the second rear cable (153).

6. The vertiport system (100) of claim 5, wherein the transfer portion (120) is configured to generate a predetermined degree of tension force or traction force in the front cable (133), the first rear cable (143), or the second rear cable (153) by driving the front motor (131), the first rear motor (141), or the second rear motor (151), respectively, in a state in which the front cable (133), the first rear cable (143), or the second rear cable (153) is connected to the aircraft (200).

7. The vertiport system (200) of claim 5 or 6, wherein:
the front transfer apparatus (130) is disposed in the first area; and
the first rear transfer apparatus (140) and the second rear transfer apparatus (150) are disposed in the second area.

8. The vertiport system (100) of one of claims 5-7, wherein the aircraft (200) is configured to be transferred between the first area and the second area by driving the front motor (131), the first rear motor (141), and the second rear motor (151) in a state in which the front cable (133), the first rear cable (143), and the second rear cable (153) are connected to the front motor (131), the first rear motor (141), and the second rear motor (151), respectively.

9. The vertiport system (100) of one of claims 5-8, wherein the motor controller (161) is configured to control the front motor (131), the first rear motor (141), and the second rear motor (151), wherein the motor controller (161) is configured to move the aircraft (200) in a rectilinear direction by collaboratively controlling the front motor (131), the first rear motor (141), and the second rear motor (151).

10. The vertiport system (100) of claim 9, wherein the motor controller (161) is configured to:
detect tension force information of the front cable (133), the first rear cable (143), and the second rear cable (153); and
control the front motor (131), the first rear motor (141), and the second rear motor (151) based on the tension force information.

11. The vertiport system (100) of claim 10, wherein each of the front motor (131), the first rear motor (141), and the second rear motor (151) comprises:
a sensor configured to measure the tension force information; and
a communication module configured to transmit the tension force information to the motor controller (161).

12. The vertiport system (100) of one of claims 9-11, wherein the rectilinear direction is a direction parallel to an imaginary straight line connecting a center of the first area and a center of the second area to each other.

13. A method of transferring an aircraft (200) in a vertiport system (100), the method comprising:
connecting a front cable (133) and a rear cable (143, 153) to respective landing gear members (230, 240) of the aircraft (200) after the aircraft (200) lands in a takeoff and landing area (111);
transferring the aircraft to a transfer area (113) including a turntable by driving a front motor (131) to which the front cable (133) is connected and a rear motor (141, 151) to which the rear cable (143, 153) is connected; and
disconnecting the front cable (133) and the rear cable (143, 153) from the landing gear members (230, 240) after transferring the aircraft (200) is completed,
**characterized in that** the method further comprises
adjusting a direction of the aircraft (200) by rotating the transfer area (113) in which the aircraft is positioned.

14. The method of claim 13, wherein:
the front cable (133) is connected to a nose landing gear member (230) of the aircraft (200);
the rear cable comprises a first rear cable (143) and a second rear cable (153) respectively connected to two main landing gear members (240) of the aircraft (200); and
the rear motor comprises a first rear motor (141) corresponding to the first rear cable (143) and a second rear motor (151) corresponding to the second rear cable (153).

## Patentansprüche

1. Ein Vertiportsystem (100), welches aufweist:
einen ersten Bereich,
einen zweiten Bereich, welcher von dem ersten Bereich getrennt ist, und
einen Transferabschnitt (120), welcher dazu eingerichtet ist, ein Flugzeug (200) zwischen dem ersten Bereich und dem zweiten Bereich zu transferieren, wobei der Transferabschnitt (120) eine vordere Transfervorrichtung (130) mit einem vorderen Seil (133), welches abnehmbar mit einem vorderen Abschnitt des Flugzeugs (200) verbindbar ist, und eine hintere Transfervorrichtung (140, 150) mit einem hinteren Seil (143, 153), welches abnehmbar mit einem hinteren Abschnitt des Flugzeugs (200) verbindbar ist, aufweist,
wobei der erste Bereich ein Transferbereich (113) ist, von welchem das Flugzeug (200) zu einem anderen Bereich oder einer Einrichtung transferiert werden soll, und der zweite Bereich ein Start- und Landebereich (111) ist, von welchem das Flugzeug (200) startet und auf welchem das Flugzeug (200) landet,
**dadurch gekennzeichnet, dass** zumindest der Transferbereich (113) eine drehbare kreisförmige Plattform aufweist,
das Vertiportsystem (100) ferner eine Steuereinrichtung (160) mit einer Motorsteuereinrichtung (161) zum Steuern von Motoren des Transferabschnitts (120) und eine Plattformsteuereinrichtung (162) zum Steuern der Drehung des Transferbereichs (113) aufweist.

2. Das Vertiportsystem (100) nach Anspruch 1, wobei:
das vordere Seil (133) dazu eingerichtet ist, lösbar mit einem Bugfahrwerkselement (230) des Flugzeugs (200) verbunden zu werden, und
das hintere Seil (143, 153) dazu eingerichtet ist, lösbar mit einem Hauptfahrwerkselement (240) des Flugzeugs (200) verbunden zu werden.

3. Das Vertiportsystem (100) nach Anspruch 1 oder 2, wobei:
die hintere Transfervorrichtung eine erste hintere Transfervorrichtung (140) und eine zweite hintere Transfervorrichtung (150) aufweist, welche jeweilig mit zwei im Flugzeug (200) angeordneten Hauptfahrwerkselementen (240) verbunden sind, und
das hintere Seil ein erstes hinteres Seil (143), welches in der ersten hinteren Transfervorrichtung (140) angeordnet ist, und ein zweites hinteres Seil (153), welches in der zweiten hinteren Transfervorrichtung (150) angeordnet ist, aufweist.

4. Das Vertiportsystem (100) nach einem der Ansprüche 1 bis 3, wobei die vordere Transfervorrichtung (130) ferner einen vorderen Motor (131) aufweist, mit welchem das vordere Seil (133) verbunden ist, wobei der vordere Motor (131) dazu eingerichtet ist, das vordere Seil (133) mit einem vorbestimmten Maß an Spannkraft zu beaufschlagen.

5. Das Vertiportsystem (100) nach Anspruch 3 oder nach Anspruch 4 in Kombination mit Anspruch 3, wobei:
die erste hintere Transfervorrichtung (140) ferner einen ersten hinteren Motor (141) aufweist, mit welchem das erste hintere Seil (143) verbunden ist, wobei der erste hintere Motor (141) dazu eingerichtet ist, das erste hintere Seil (143) mit einem vorbestimmten Maß an Spannkraft zu beaufschlagen, und
die zweite hintere Transfervorrichtung (150) ferner einen zweiten hinteren Motor (151) aufweist, mit welchem das zweite hintere Seil (153) verbunden ist, wobei der zweite hintere Motor (151) dazu eingerichtet ist, das zweite hintere Seil (153) mit einem vorbestimmten Maß an Spannkraft zu beaufschlagen.

6. Das Vertiportsystem (100) nach Anspruch 5, wobei der Transferabschnitt (120) dazu eingerichtet ist, ein vorbestimmtes Maß an Spannkraft oder Zugkraft in dem vorderen Seil (133), dem ersten hinteren Seil (143) oder dem zweiten hinteren Seil (153) zu erzeugen, indem der vordere Motor (131), der erste hintere Motor (141) und der zweite hintere Motor (151) jeweilig in einem Zustand angetrieben werden, in welchem das vordere Seil (133), das erste hintere Seil (143) oder das zweite hintere Seil (153) mit dem Flugzeug (200) verbunden ist.

7. Das Vertiportsystem (200) nach Anspruch 5 oder 6, wobei:
die vordere Transfervorrichtung (130) in dem ersten Bereich angeordnet ist, und
die erste hintere Transfervorrichtung (140) und die zweite hintere Transfervorrichtung (150) in dem zweiten Bereich angeordnet sind.

8. Das Vertiportsystem (100) nach einem der Ansprüche 5 bis 7, wobei das Flugzeug (200) dazu eingerichtet ist, zwischen dem ersten Bereich und dem zweiten Bereich transferiert zu werden, indem der vordere Motor (131), der erste hintere Motor (141) und der zweite hintere Motor (151) in einem Zustand angetrieben werden, in welchem das vordere Kabel (133), das erste hintere Kabel (143) und das zweite hintere Kabel (153) mit dem vorderen Motor (131), dem ersten hinteren Motor (141) und dem zweiten hinteren Motor (151) jeweilig verbunden sind.

9. Das Vertiportsystem (100) nach einem der Ansprüche 5-8, wobei die Motorsteuereinrichtung (161) dazu eingerichtet ist, den vorderen Motor (131), den ersten hinteren Motor (141) und den zweiten hinteren Motor (151) zu steuern, wobei die Motorsteuereinrichtung (161) dazu eingerichtet ist, das Flugzeug (200) in einer geradlinigen Richtung zu bewegen, indem sie den vorderen Motor (131), den ersten hinteren Motor (141) und den zweiten hinteren Motor (151) kollaborativ steuert.

10. Das Vertiportsystem (100) nach Anspruch 9, wobei die Motorsteuereinrichtung (161) dazu eingerichtet ist:
Informationen über die Spannkraft des vorderen Seils (133), des ersten hinteren Seils (143) und des zweiten hinteren Seils (153) zu detektieren, und
den vorderen Motor (131), den ersten hinteren Motor (141) und den zweiten hinteren Motor (151) auf Grundlage der Spannkraftinformationen zu steuern.

11. Das Vertiportsystem (100) nach Anspruch 10, wobei der vordere Motor (131), der erste hintere Motor (141) und der zweite hintere Motor (151) jeweils aufweisen:
einen Sensor, welcher dazu eingerichtet ist, die Spannkraftinformationen zu messen, und
ein Kommunikationsmodul, welches dazu eingerichtet ist, die Spannkraftinformationen an die Motorsteuereinrichtung (161) zu übertragen.

12. Das Vertiportsystem (100) nach einem der Ansprüche 9-11, wobei die geradlinige Richtung eine Richtung parallel zu einer imaginären geraden Linie ist, welche eine Mitte des ersten Bereichs und eine Mitte des zweiten Bereichs miteinander verbindet.

13. Ein Verfahren zum Transferieren eines Flugzeugs (200) in einem Vertiportsystem (100), wobei das Verfahren aufweist:
Verbinden eines vorderen Seils (133) und eines hinteren Seils (143, 153) mit jeweiligen Fahrwerkselementen (230, 240) des Flugzeugs (200), nachdem das Flugzeug (200) in einem Start- und Landebereich (111) gelandet ist,
Transferieren des Flugzeugs zu einem Transferbereich (113), welcher eine Drehplattform aufweist, durch Antreiben eines vorderen Motors (131), mit welchem das vordere Seil (133) verbunden ist, und eines hinteren Motors (141, 151), mit welchem das hintere Seil (143, 153) verbunden ist, und
Trennen des vorderen Seils (133) und des hinteren Seils (143, 153) von den Fahrwerkselementen (230, 240), nachdem das Transferieren des Flugzeugs (200) abgeschlossen ist,
**dadurch gekennzeichnet, dass** das Verfahren ferner aufweist
Einstellen einer Richtung des Flugzeugs (200) durch Drehen des Transferbereichs (113), in welchem das Flugzeug angeordnet ist.

14. Das Verfahren nach Anspruch 13, wobei:
das vordere Seil (133) mit einem Bugfahrwerkselement (230) des Flugzeugs (200) verbunden ist,
das hintere Seil ein erstes hinteres Seil (143) und ein zweites hinteres Seil (153) aufweist, die jeweilig mit zwei Hauptfahrwerkselementen (240) des Flugzeugs (200) verbunden sind, und
der hintere Motor einen ersten hinteren Motor (141), welcher zu dem ersten hinteren Seil (143) gehört, und einen zweiten hinteren Motor (151), welcher zu dem zweiten hinteren Seil (153) gehört, aufweist.

## Revendications

1. Système de vertiport (100), comprenant :
une première zone ;
une deuxième zone séparée de la première zone ; et
une partie de transfert (120) configurée pour transférer un aéronef (200) entre la première zone et la deuxième zone, dans lequel la partie de transfert (120) comprend un dispositif de transfert avant (130) comportant un câble avant (133) pouvant être connecté de manière amovible à une partie avant de l'aéronef (200) et un dispositif de transfert arrière (140, 150) comportant un câble arrière (143, 153) pouvant être connecté de manière amovible à une partie arrière de l'aéronef (200),
dans lequel la première zone est une zone de transfert (113) à partir de laquelle l'aéronef (200) doit être transféré vers une autre zone ou une autre installation ; et la deuxième zone est une zone de décollage et d'atterrissage (111) à partir de laquelle l'aéronef (200) décolle et sur laquelle l'aéronef (200) atterrit,
**caractérisé en ce qu'**au moins la zone de transfert (113) comprend une plate-forme circulaire rotative,
le système de vertiport (100) comprend en outre un contrôleur (160) comprenant un contrôleur de moteur (161) contrôlant des moteurs de la partie de transfert (120) et un contrôleur de plate-forme (162) contrôlant une rotation de la zone de transfert (113).

2. Système de vertiport (100) selon la revendication 1, dans lequel :
le câble avant (i33) est configuré pour être connecté de manière amovible à un élément de train d'atterrissage avant (230) de l'aéronef (200) ; et
le câble arrière (143, 153) est configuré pour être connecté de manière amovible à un élément de train d'atterrissage principal (240) de l'aéronef (200).

3. Système de vertiport (100) selon la revendication 1 ou 2, dans lequel :
le dispositif de transfert arrière comprend un premier dispositif de transfert arrière (140) et un deuxième dispositif de transfert arrière (150) respectivement connectés à deux éléments de train d'atterrissage principal (240) disposés dans l'aéronef (200) ; et
le câble arrière comprend un premier câble arrière (143) disposé dans le premier dispositif de transfert arrière (140) et un deuxième câble arrière (153) disposé dans le deuxième dispositif de transfert arrière (150).

4. Système de vertiport (100) selon l'une des revendications 1 à 3, dans lequel le dispositif de transfert avant (130) comprend en outre un moteur avant (131) auquel le câble avant (133) est connecté, le moteur avant (131) étant configuré pour fournir un degré prédéterminé de force de tension au câble avant (133).

5. Système de vertiport (100) selon la revendication 3 ou selon la revendication 4 en combinaison avec la revendication 3, dans lequel :
le premier dispositif de transfert arrière (140) comprend en outre un premier moteur arrière (141) auquel le premier câble arrière (143) est connecté, le premier moteur arrière (141) étant configuré pour fournir un degré prédéterminé de force de tension au premier câble arrière (143) ; et
le deuxième dispositif de transfert arrière (150) comprend en outre un deuxième moteur arrière (151) auquel le deuxième câble arrière (153) est connecté, le deuxième moteur arrière (151) étant configuré pour fournir un degré prédéterminé de force de tension au deuxième câble arrière (153).

6. Système de vertiport (100) selon la revendication 5, dans lequel la partie de transfert (120) est configurée pour générer un degré prédéterminé de force de tension ou de force de traction dans le câble avant (133), le premier câble arrière (143) ou le deuxième câble arrière (153) en entraînant le moteur avant (131), le premier moteur arrière (141) ou le deuxième moteur arrière (151), respectivement, dans un état dans lequel le câble avant (133), le premier câble arrière (143) ou le deuxième câble arrière (153) est connecté à l'aéronef (200).

7. Système de vertiport (200) selon la revendication 5 ou 6, dans lequel :
le dispositif de transfert avant (130) est disposé dans la première zone ; et
le premier dispositif de transfert arrière (140) et le deuxième dispositif de transfert arrière (150) sont disposés dans la deuxième zone.

8. Système de vertiport (100) selon l'une des revendications 5 à 7, dans lequel l'aéronef (200) est configuré pour être transféré entre la première zone et la deuxième zone en entraînant le moteur avant (131), le premier moteur arrière (141) et le deuxième moteur arrière (151) dans un état dans lequel le câble avant (133), le premier câble arrière (143) et le deuxième câble arrière (153) sont connectés respectivement au moteur avant (131), au premier moteur arrière (141) et au deuxième moteur arrière (151).

9. Système de vertiport (100) selon l'une des revendications 5 à 8, dans lequel le contrôleur de moteur (161) est configuré pour contrôler le moteur avant (131), le premier moteur arrière (141) et le deuxième moteur arrière (151), dans lequel le contrôleur de moteur (161) est configuré pour déplacer l'aéronef (200) dans une direction rectiligne en contrôlant de manière collaborative le moteur avant (131), le premier moteur arrière (141) et le deuxième moteur arrière (151).

10. Système de vertiport (100) selon la revendication 9, dans lequel le contrôleur de moteur (161) est configuré pour :
détecter des informations de force de tension du câble avant (133), du premier câble arrière (143) et du deuxième câble arrière (153) ; et
contrôler le moteur avant (131), le premier moteur arrière (141) et le deuxième moteur arrière (151) sur la base des informations de force de tension.

11. Système de vertiport (100) selon la revendication 10, dans lequel chacun parmi le moteur avant (131), le premier moteur arrière (141) et le deuxième moteur arrière (151) comprend :
un capteur configuré pour mesurer les informations de force de tension ; et
un module de communication configuré pour transmettre les informations de force de tension au contrôleur de moteur (161).

12. Système de vertiport (100) selon l'une des revendications 9 à 11, dans lequel la direction rectiligne est une direction parallèle à une ligne droite imaginaire reliant entre eux un centre de la première zone et un centre de la deuxième zone.

13. Procédé de transfert d'un aéronef (200) dans un système de vertiport (100), le procédé comprenant :
la connexion d'un câble avant (133) et d'un câble arrière (143, 153) à des éléments respectifs de train d'atterrissage (230, 240) de l'aéronef (200) après que l'aéronef (200) a atterri dans une zone de décollage et d'atterrissage (111) ;
le transfert de l'aéronef vers une zone de transfert (113) comprenant un plateau tournant en entraînant un moteur avant (131) auquel le câble avant (133) est connecté et un moteur arrière (141, 151) auquel le câble arrière (143, 153) est connecté ; et
la déconnexion du câble avant (133) et du câble arrière (143, 153) des éléments de train d'atterrissage (230, 240) une fois le transfert de l'aéronef (200) terminé,
**caractérisé en ce que** le procédé comprend en outre
l'ajustement d'une direction de l'aéronef (200) en faisant tourner la zone de transfert (113) dans laquelle l'aéronef est positionné.

14. Procédé selon la revendication 13, dans lequel :
le câble avant (133) est connecté à un élément de train d'atterrissage avant (230) de l'aéronef (200) ;
le câble arrière comprend un premier câble arrière (143) et un deuxième câble arrière (153) reliés respectivement à deux éléments de train d'atterrissage principal (240) de l'aéronef (200) ; et
le moteur arrière comprend un premier moteur arrière (141) correspondant au premier câble arrière (143) et un deuxième moteur arrière (151) correspondant au deuxième câble arrière (153).
